# EUROPEAN PATENT APPLICATION

(11) **EP 1 508 875 A2**
(43) Date of publication of application: **23.02.2005**
(21) Application number: 04018413.7
(22) Date of filing: 03.08.2004
(51) Int. Cl.: G06T 1/00

(54) **Method for converting power point presentation files into compressed image files**

(30) Priority: 20.08.2003 US 644257
(71) Applicant: Seiko Epson Corporation, Shinjuku-ku, Tokyo 163 (JP)
(72) Inventor: Yim, Wai, Mountain View, California 94040 (US); Nelson, Steve, San Jose, California 95139 (US)
(74) Representative: Grünecker, Kinkeldey, Stockmair & Schwanhäusser Anwaltssozietät

(57) **Abstract**

A method for converting Microsoft® PowerPoint® (PPT) presentation files into compressed image files is provided. The method includes reading and parsing a PPT presentation file to identify each presentation slide and each presentation object in each presentation slide. The attributes of each presentation object are examined to determine whether effects are applied, and to identify animated GIF objects. The method provides for capturing the end-point effect applied to any presentation object and rendering the presentation object in as many compressed image files as necessary to capture the end-point effect. Additionally, each image of an animated GIF object is analyzed to determine the most complex image to render in a compressed image file.

## Description

### BACKGROUND OF THE INVENTION

### 1. Field of the Invention

The present invention relates generally to digital image files, and more particularly to the conversion of Microsoft® PowerPoint® presentation slides into compressed, single-image files.

### 2. Description of the Related Art

The conversion of PowerPoint® presentation slides into JPEG files is a standard feature in both Microsoft® PowerPoint® and Sun MicroSystems® StarOffice®. Both applications essentially map all presentation objects in a slide onto a single JPEG image file per slide. In the process, all of the presentation effect information is essentially lost.

As is known, a PowerPoint® (hereinafter PPT) presentation slide can contain a plurality of presentation objects such as text, images, frames, etc. Each object can have attributes or effects applied, and further, some objects can be animated. In a single PPT presentation slide, a plurality of presentation objects can have various kinds and types of effects, one or more objects can be animated, and a resulting single PPT presentation slide can appear to present active movement or other effects that might otherwise be achievable through motion image technology and successive individual frames. A single PPT presentation slide, however, achieves the apparent motion, animation, or other effects through the application or attribution of effects and/or animation to each of the presentation objects assigned, constructed, or otherwise contained within the PPT presentation slide.

By way of example, a single exemplary PPT presentation slide might contain text, one or more object frames, and one or more images. Effects and attributes can be applied so that lines of text appear one after another until all of the text is displayed, a first image might be visible in one comer of the presentation slide, and might disappear at a designated event (*e.g.*, a mouse click, or upon presentation of a designated line of text), and a second image might initially be hidden from view (*e.g.*, not displayed), and subsequently appear, fade-in, enter, or otherwise be displayed within the object frame. In this example, the single PPT presentation slide might contain the apparent activity of appearing text, disappearing images, and an entering image.

As described above, Microsoft's® PowerPoint® and Sun MicroSystems'® StarOffice® applications contain conversion algorithms for creating JPEG image files from PPT presentations that essentially map all presentation objects in a presentation slide onto a single JPEG image file, resulting in one JPEG image file per presentation slide. In the process, essentially all of the presentation effect is lost. In other words, effects such as "appearing," "vanishing," "dimming," etc., which cannot be captured in a single JPEG image file, are thereby lost. Further, in capturing images having an animated GIF presentation object, existing software extract only the very first image in the animated GIF. Most of the time, however, the first image in an animated GIF isn't the image having the highest presentation relevance, interest, or impact. Typical animations illustrate a development of an object, or movement of an object to a destination or end point to present an ultimate impact, relevance, or statement of the presentation. Often, the first image in an animated GIF presentation or file is a blank image. Therefore, the animated GIF object converted using typical prior art software will not show up in the resulting JPEG file.

In consideration of the above, there is a need to overcome the limitations of the prior art to provide a method and system for converting PPT presentation slides into JPEG, or any other compressed, single image format, image files compatible across a plurality of applications, operating systems, and the like, while preserving at least some of the effects attributed to the presentation objects and capturing the most interesting or significant image of any animated objects.

### SUMMARY OF THE INVENTION

Broadly speaking, the present invention fills these needs by providing a method for converting PowerPoint® presentation files into a plurality of compressed image files that preserve at least some of the effects attributed to the presentation objects and capture the most interesting or significant image of any animated objects. The present invention can be implemented in numerous ways, including as a process, an apparatus, a system, a device, a method, or a computer readable media. Several embodiments of the present invention are described below.

In one embodiment, a method for converting a PowerPoint® (PPT) presentation file into compressed single image files is provided. The method includes opening a PPT presentation file, and parsing the PPT presentation file to identify each presentation slide and to identify each presentation object presented in each presentation slide. Next, the method provides for generating a first compressed single image format image capturing a presentation object in a first presentation slide of the PPT presentation file. A second compressed single image format image is then generated to capture the presentation object in the first presentation slide of the PPT presentation file. The first compressed single image format image captures the presentation object before an effect is applied, and the second compressed single image format image captures an end-point of the effect applied to the presentation object.

In another embodiment, a method to create JPEG image format files from a PowerPoint® (PPT) presentation file is provided. The method includes identifying each presentation slide in the PPT presentation file, and identifying each presentation object in each presentation slide. The method further provides for determining whether each presentation object in each presentation slide has effects applied, and for determining whether each presentation object in each presentation slide is an animated GIF object. An image is rendered into an image buffer for each animated GIF object, and a JPEG image format file is generated to show an end effect for any presentation object having effects applied.

In still a further embodiment, a computer readable media having program instructions for converting a PowerPoint® (PPT) presentation file into a plurality of compressed image files is provided. The computer readable media includes program instructions for parsing the PPT presentation file, and for identifying each presentation slide in the PPT presentation file. Program instructions are provided for identifying a presentation object in each presentation slide in the PPT presentation file, and for determining whether the presentation object has presentation effects. The program instructions on the computer readable media further provide for generating a first compressed image file showing the presentation object, and for generating a second compressed image file showing the presentation object having the effect applied.

In yet another embodiment, an integrated circuit chip for converting a PowcrPoint® (PPT) presentation file into a plurality of compressed images files is provided. The integrated circuit chip includes logic for reading the PPT presentation file, and logic for parsing the PPT presentation file. The integrated circuit chip further includes logic for identifying each presentation slide in the PPT presentation file, and logic for identifying each presentation object in each presentation slide. Additionally, the integrated circuit chip provides logic for generating a first compressed image file showing a presentation object without a presentation effect applied, and logic for generating a second compressed image file showing an end effect of a presentation object having an effect applied.

The advantages of the present invention are numerous, and will become apparent from the following detailed description, taken in conjunction with the accompanying drawings, illustrating by way of example the principles of the invention.

### BRIEF DESCRIPTION OF THE DRAWINGS

The accompanying drawings, which are incorporated in and constitute part of this specification, illustrate exemplary embodiments of the invention and together with the description serve to explain the principles of the invention.

Figure 1 shows a presentation slide and all of the presentation objects that have been constructed on or assigned to the presentation slide.

Figure 2 is an illustration of a single image JPEG file of a PPT presentation slide as converted from PPT to JPEG formats by the Microsoft® PowerPoint® program.

Figure 3 shows a first single image JPEG file generated by converting the PPT presentation slide described in Figure 1, in accordance with one embodiment of the present invention.

Figure 4 is a next or second single image JPEG file generated by converting the PPT presentation slide described in Figure 1, in accordance with one embodiment of the present invention.

Figure 5 is a next or third single image JPEG file generated by converting the PPT presentation slide described in Figure 1, in accordance with one embodiment of the present invention.

Figure 6 shows the first of two JPEG image files illustrating the presentation effects assigned to the frog image in accordance with one embodiment of the invention.

Figure 7 shows the second of two JPEG image files generated to illustrate the effects assigned or attributed to the frog image in accordance with an embodiment of the invention.

Figure 8 shows the final JPEG image generated from the PPT presentation slide described and illustrated in Figure 1 in accordance with one embodiment of the invention.

Figure 9 is a flow chart diagram illustrating the method operations to convert a PPT slide presentation into single-image JPEG files in accordance with one embodiment of the present invention.

Figure 10 is a continuation of the flow chart diagram illustrating the method operations to convert a PPT slide presentation into single-image JPEG files in accordance with one embodiment of the present invention.

### DETAILED DESCRIPTION OF THE PREFERRED EMBODIMENTS

An invention for the conversion of Microsoft® PowerPoint® (PPT) presentation slides to compressed, single image format, image files is disclosed. In preferred embodiments, the present invention includes conversion of each presentation slide having presentation objects with effect(s) applied into a plurality of suitable compressed single image files, such as JPEG format files, that preserve and capture end-point effect of each presentation object as well as the most complex and interesting of the animated GIF images.

In the following description, numerous specific details are set forth in order to provide a thorough understanding of the present invention. It will be understood, however, to one skilled in the art, that the present invention may be practiced without some or all of these specific details. In other instances, well known process operations have not been described in detail in order not to unnecessarily obscure the present invention.

As an overview, embodiments of the present invention provide for the conversion of PPT presentation slides to compressed, single image format files such as JPEG image files. The JPEG format is exemplary of a compressed, single image format compatible across a plurality of applications, operating systems, and the like, and embodiments of the present invention are illustrated with the JPEG format, but are applicable to essentially any desired format. For each presentation slide in a PPT file, presentation objects are identified and then examined to determine what, if any, presentation effects have been attributed, assigned, or otherwise applied to each presentation object. Examples of presentation effects include appearing, vanishing, dimming, etc. Additionally, each presentation object is examined for the presence of an animated GIF image. Any animated GIF image is analyzed to determine a most interesting or complex image which is then selected for rendering to a JPEG image file. A single presentation slide might thereby generate or convert to a plurality of JPEG image files to capture and present source presentation effects, complex animation images, etc.

In one embodiment of the present invention, a program or computer application opens a PPT presentation file. For each presentation slide in the presentation file, the program looks at each presentation object in the slide. As used herein, a "presentation object" includes text and graphic or image objects, and animation objects. If the presentation object has effect information assigned or attributed to it, an embodiment of the invention next determines if the effect or attribute is a "one time" effect. Examples of presentation effects include multi-directional blinds, dissolving, wiping, checkerboard, flying, swiveling, exploding, etc. Often, such effects are "one time" effects or events in the presentation of an object that is to be presented or removed from the display of a presentation slide. Typical one time effects include appearing, vanishing, and dimming effects, and such effects cannot be adequately captured and perceived in a single, static, JPEG image.

In one embodiment of the invention, a JPEG image file is generated to capture the object both before and after the application of the effect. By way of example, an appearing effect that is assigned to a text presentation object might generate a JPEG image file of the presentation slide before the effect is applied to the presentation object, *e*.*g*., before the text appears on the slide, and another JPEG image file of the presentation slide after the effect is applied, *e.g.*, after the text appears on the presentation slide.

In one embodiment of the invention, a presentation object is examined to determine whether the presentation object is an animated GIF object. When an animated GIF object is identified, an analysis of the animation is performed. Because animation is typically used to develop an object, move an object to an end point or destination, build an object for emphasis, etc., a first image in the animation is not necessarily the desired or ideal image to capture and communicate the intended presentation. In one embodiment, a method and system of the present invention determines the most complex image in an animated GIF file by analyzing the image to identify the most edge information and complexity. Embodiments include applying a Roberts Cross Operator to all pixels in each individual image of the GIF. Then, the resulting spatial gradient for the image is summed. The method and system choose the image with the highest spatial gradient total for rendering in the JPEG image. Although the Roberts Cross operator was selected for use to illustrate embodiments of the present invention, it should be appreciated that any suitable analysis tool used to help determine a most complex or interesting image in the animated GIF can be used.

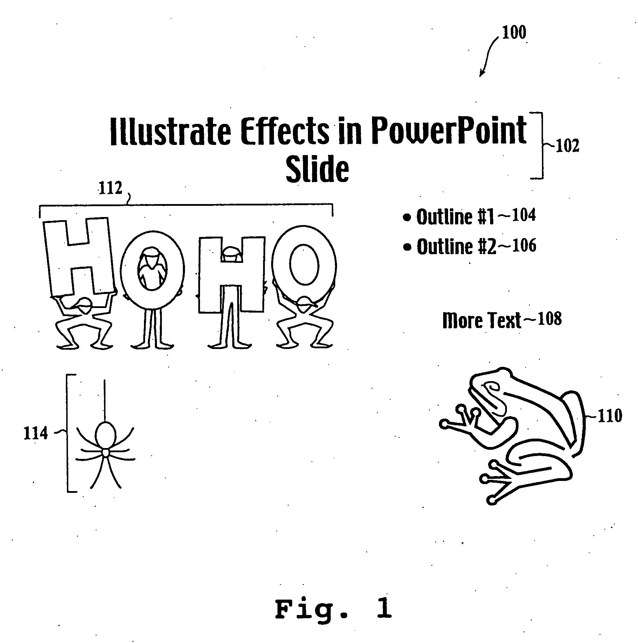

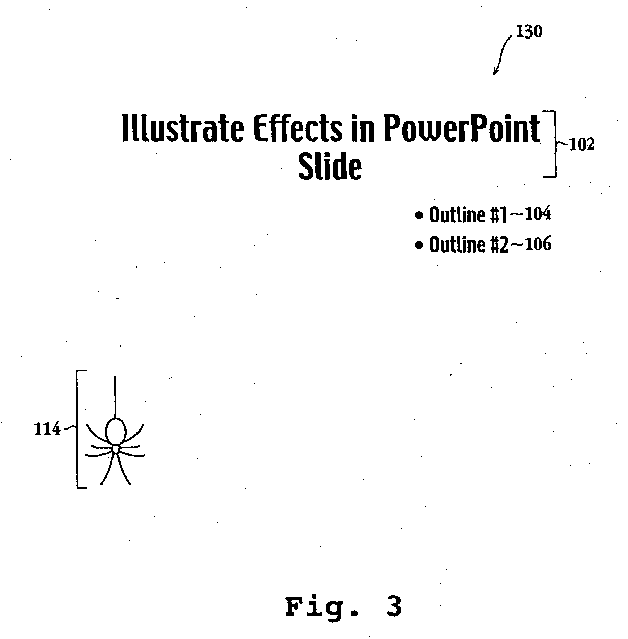

Embodiments of the present invention are illustrated in the following Figures 3-8, which are generated from a single PPT presentation slide. As is known, a PPT presentation can include from one to a plurality of presentation slides, with each presentation slide having from one to a plurality of presentation objects. Embodiments of the present invention are illustrated and described using a single PPT presentation slide. Figure 1 illustrates each of the presentation objects of the single PPT presentation slide 100. In the execution of the PPT presentation corresponding to the illustrated presentation slide 100, not all of the objects illustrated in Figure 1 are visible or presented at the same time as will be described in detail below. The illustrated presentation slide 100 includes a plurality of presentation objects including title text 102, a first line of text 104, a second line of text 106, a third line of text 108, a frog image 110, a "HOHO" image 112, and a spider image 114. Each of the illustrated presentation objects may or may not have presentation effects assigned, may or may not be assigned a specific display order, and may or may not be an animated GIF presentation object. In the illustrated example, it is given that the title text 102, the first line of text 104, and the second line of text 106 are essentially static and have no presentation effects assigned, and are also not animated GIF objects. The third line of text 108 and the frog image 110 have presentation effects assigned, the spider image 114 is an animated GIF presentation object, and the "HOHO" image 112 is an animated GIF presentation object with presentation effects assigned. The assigned effects and animation are described in greater detail below in reference to Figures 3-8.

Figure 1 shows a PPT presentation slide 100 and all of the presentation objects that have been constructed on or assigned to the presentation slide 100. If Figure 1 were a screen capture of the first slide in a PPT presentation, all of the presentation objects might or might not be visible, depending on the presentation effects assigned to each of the presentation objects, a display order assigned to each of the presentation objects, and depending on at what point in the running of the slide show presentation the screen was captured. As is known, some presentation effects establish a presentation order of presentation objects, delay the appearance of presentation objects, and other such effects that result in certain presentation objects being visible, or not, in the first image of a presentation slide. Figure 1 shows all of the presentation objects of the presentation slide 100 as the presentation objects might appear during the construction of the PPT presentation slide 100. As is known, presentation objects can be pasted, copied into, imported, typed, constructed, or otherwise inserted into a presentation slide, and each of the presentation objects can be assigned particular presentation effects, can be animated, can be assigned a presentation order, etc. Figure 1 shows all of the presentation objects that have been assigned to or included in presentation slide 100 without indication of effect, presentation order, or animation that can be assigned to each presentation object.

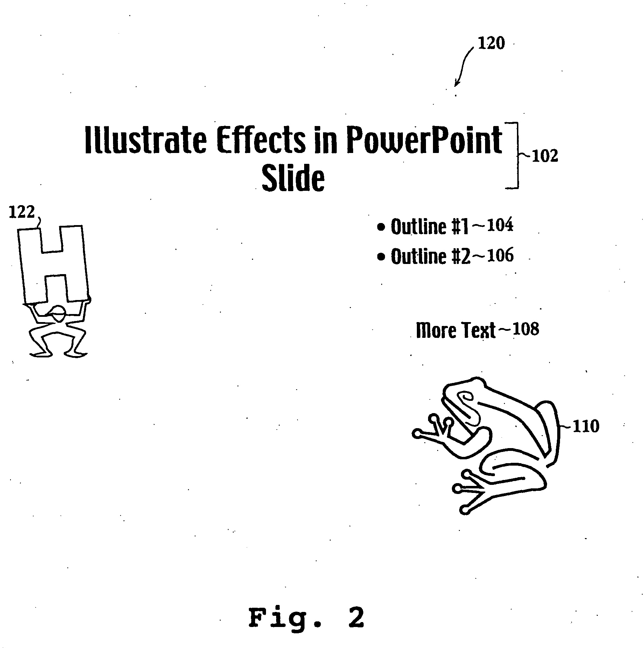

Figure 2 is an illustration of a single image JPEG file of a PPT presentation slide 120 as converted from PPT to JPEG formats by the Microsoft® PowerPoint® program. The presentation slide 120 shown in Figure 2 corresponds to the PPT presentation slide shown and described above in reference to Figure 1. As described above, the title text 102, the first line of text 104, and the second line of text 106 are essentially static having no presentation effects assigned, and are also not animated GIF objects, and are represented in Figure 2 in essentially an identical presentation as shown in Figure 1. The third line of text 108 and the frog image 110 are also shown essentially identical to the corresponding presentation objects illustrated in Figure 1. As described above, both the third line of text 108 and the frog image 110 have been assigned presentation effects, but no presentation effects, nor any presentation impact, are discernible in the JPEG conversion illustrated in Figure 2. Also, neither the "HOHO" 112 nor the spider image 114 (see Figure 1) animated GIF presentation objects are visible in the JPEG conversion illustrated in Figure 2. A single "H" 122 is all that is rendered in the presentation slide 120 shown in figure 2.

As described above, typical animations illustrate a development of an object, or movement of an object to a destination or end point to present an ultimate impact, relevance, or statement of the presentation, and often, the first image in an animated GIF presentation or file is a blank image. In Figure 2, the "H" 122 is apparently an initial image in the development of the "HOHO" 112 shown in Figure 1, and the first image of the spider image 114 animated GIF is apparently a blank image as no corresponding image is rendered in Figure 2.

The animation of the "HOHO" 112 and the spider image 114 (see Figure 1) is as follows. The "HOHO" 112 moves across the screen in the direction from the bottom of the screen towards the top. Once the image is in its assigned position (the location shown in Figure 1), the last three letters disappear, and then the last three letters appear or are added to the image one at a time until the "HOHO" is complete. The last three letters disappear, and then are added again one at a time in a continuously repeating loop. The spider image 114 appears in position (the location shown in Figure 1) by dropping into position at that location, and then the image disappears by retracting out of position. An invisible frame is positioned at the location for the spider image 114 so that as the spider descends into position and then retracts from view, the image appears and disappears at the designated position and does not cross other locations on the screen image. The spider image 114 essentially descends and retracts, appearing and disappearing in a continuous loop.

Figure 3 shows a first single image JPEG file generated by converting the PPT presentation slide described in Figure 1, in accordance with one embodiment of the present invention. Embodiments of the present invention provide for the creation of as many single image JPEG files as necessary to capture and illustrate the most interesting or complex image of animated GIF presentation objects, and to capture and illustrate effects assigned or applied to other, non-animated, presentation objects. In Figure 3, the first single image JPEG file of the PPT presentation slide 100 described in Figure 1 shows a presentation slide 130 having title text 102, a first line of text 104, and a second line of text 106. These three presentation objects, the title text 102, the first line of text 104, and the second line of text 106, have been described as essentially static presentation objects without presentation effects applied. The presentation objects therefore appear essentially as constructed and described in Figure 1, and are essentially the same as the corresponding presentation objects captured and illustrated in Figure 2, using the prior art conversion method provided in the PPT program.

The spider image 114 is captured and illustrated in Figure 3 in its most complex and interesting form. As described above, the spider image 114, as constructed in the original PPT presentation source file, is an animated GIF presentation object that alternately appears and disappears from the presentation slide 100 (see Figure 1) by descending into position and then retracting from view in an invisible frame surrounding the location or position on the presentation slide 100 (see Figure 1) so that the spider image 114 appears and disappears without crossing over or traversing other presentation objects on the presentation slide 100.

The first image in the GIF animated presentation object that is the spider image 114 is a blank image. The spider is retracted from view, and in the captured and illustrated single image JPEG image 120 in Figure 2 above, no spider image is rendered. Since the first image of the animated GIF presentation object is a blank image, the spider is not captured in the prior art process as illustrated in Figure 2. In accordance with an embodiment of the present invention, however, the entire animated GIF presentation object is analyzed, and the most complex and interesting image is selected and rendered in the presentation slide 130 as illustrated in Figure 3.

In one embodiment, a program parses the PPT presentation file to identify all presentation objects, and then for each slide, determines which, if any, presentation objects are animated GIF presentation objects. When an animated GIF presentation object is identified, one embodiment of the invention provides for the analysis of each image in the animated GIF to measure the image complexity. In one embodiment, the analysis is by the application of a Roberts Cross operator to compute a spatial gradient measurement on each image in the animated GIF. The image with the highest gradient sum is selected for rendering to a single image JPEG file. Of course, a Roberts Cross operator image analysis is only one method of image analysis, and any other method to measure pixel gradient, edge definition, or other indicator of image complexity can be used. In other embodiments, alternative image analysis is performed, including such analysis methods known in the art as 2-Dimension Discrete Cosine Transform (DCT) and analyze the resulting DCT coefficients, Laplacian edge detection, Canny Edge Detection, and other such methods that can be used to analyze an image's content.

In Figure 3, therefore, a first single image JPEG file is generated to capture and illustrate the most complex or interesting image of the animated GIF that is the spider image 114. The exemplary PPT presentation slide 100 (see Figure 1) includes two animated GIF objects (112, 114), and two presentation objects having effects applied (108, 110). Multiple single image JPEG files will be generated to capture the effects applied to the presentation objects, and in particular the end effect applied, and to capture the most interesting or complex of the animated GIF presentation objects.

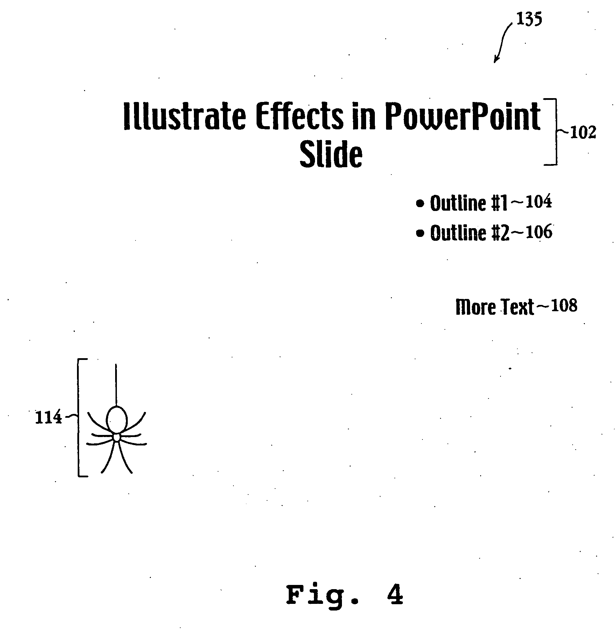

Figure 4 is a next or second single image JPEG file generated by converting the PPT presentation slide described in Figure 1, in accordance with one embodiment of the present invention. In Figure 4, the third line of text 108 has been added to the presentation slide 135 image. The title text 102, the first line of text 104, and the second line of text 106 remain as described and illustrated in Figure 3. The third line of text 108 has some effect or effects applied, and the first noticeable effect is that the third line of text 108 has an appearing effect applied. Since the third line of text 108 was not visible in Figure 3, the third line of text 108 appears (in the source PPT presentation file) upon or after the spider image 114 descends into, or appears in, the presentation slide 135.

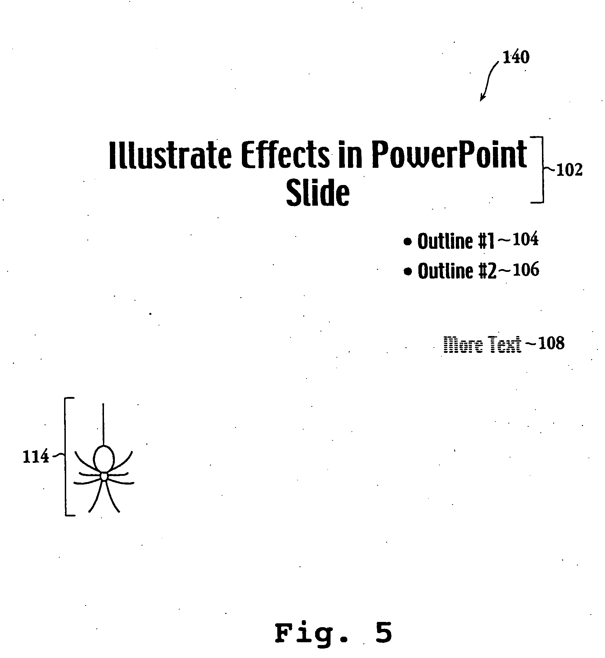

Figure 5 is a next or third single image JPEG file of a presentation slide image 140 generated by converting the PPT presentation slide described in Figure 1, in accordance with one embodiment of the present invention. As shown in Figure 5, the third line of text 108 has an additional dimming effect applied. Note the title text 102, the first line of text 104, and the second line of text 106 all remain essentially the same as illustrated and described in Figure 4. The third line of text 108, however, is now (in Figure 5) shown as dimmed or "grayed out" text, illustrating the effect and/or effects that have been applied to the presentation object. In accordance with an appearing effect, or a presentation order, the third line of text "appears" in Figure 4, and then is dimmed or "grayed out" in Figure 5. The dimming effect, like the appearing effect, cannot be adequately illustrated in a single JPEG file, but in accordance with an embodiment of the present invention, at least two single image JPEG files have been generated to illustrate the dimming effect assigned, and when taken in conjunction with the first JPEG image generated (Figure 3), illustrate an appearing effect or appearance order assigned to the presentation objects shown and described in Figure 1. Therefore, in one embodiment of the invention, the effects attributed or assigned to the third line of text 108 are appreciable from at least the two JPEG files generated (Figures 4 and 5) that first illustrate the third line of text 108 in regular text (Figure 4), and then illustrate the effect of dimming that has been assigned or attributed to the presentation object (Figure 5). Although the "appearing" of the third line of text 108 might be perceived as an effect assigned, in one embodiment of the invention, the fact that the third line of text 108 appears in Figure 4 while absent from Figure 3 can be explained by the presentation order assigned to the presentation objects in accordance with known PPT practice and process. Of course, the presentation order has the result of presenting an effect for any presentation object to which an order is assigned and operates.

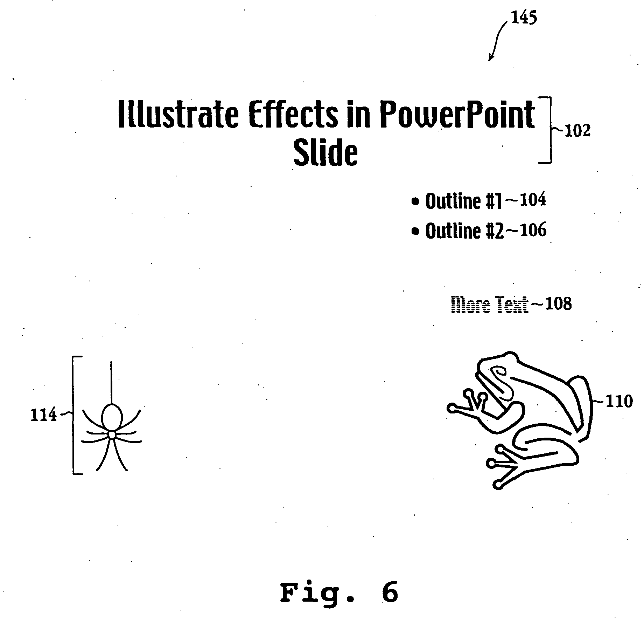

Figure 6 shows the first image 145 of two JPEG image files illustrating the presentation effects assigned to the frog image 110 in accordance with one Embodiment of the invention. In Figure 6, the frog image 110 "appears" below the grayed out third line of text 108, described above in reference to Figures 4 and 5. As described above, the third line of text 108 first appears (Figure 4), and then dims or grays out (Figure 5). In Figure 6, the third line of text 108 is grayed out, and the frog image 110 is presented below the grayed out third line of text 108. In one embodiment, after the effect of dimming or graying out of the third line of text 108 is presented, the frog image 110 appears. The effect assigned to the frog image may be one of appearing, and the presentation order of the frog image 110 presentation object is to appear after the dimming effect is applied to the third line of text 108. In accordance with one embodiment of the invention, if the effect or effects assigned or attributed to the frog image 110 could be adequately captured in a single JPEG image file, following the previously described image files already generated, then a single additional JPEG image file would be all that is required and generated. In the exemplary PPT slide, however, an additional JPEG image file is generated to illustrate further effects assigned, the end effect of effects assigned or attributed to the frog image 110.

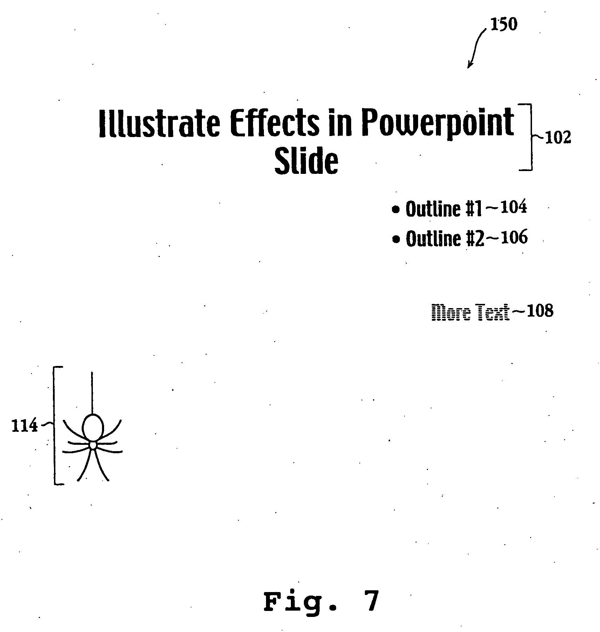

Figure 7 shows the second image 150 of two JPEG image files generated to illustrate the effects assigned or attributed to the frog image 110 in accordance with an embodiment of the invention. In Figure 7, the title text 102, the first line of text 104, the second line of text 106, the third line of text 108, and the spider image 114 remain essentially exactly as illustrated in Figure 6. The frog image 110 shown in Figure 6 has disappeared or "vanished" in Figure 7. The effects assigned to the frog image 110 are then to appear upon or after the third line of text 108 is dimmed or grayed out, and then to vanish. In accordance with an embodiment of the present invention, the effects assigned to the frog image 110 generate at least two JPEG image files (Figures 6 and 7), and when taken in conjunction with the other JPEG image files generated (Figures 3, 4, and 5), illustrate the effects assigned or attributed to the presentation objects described that cannot be conveyed in a single JPEG image file.

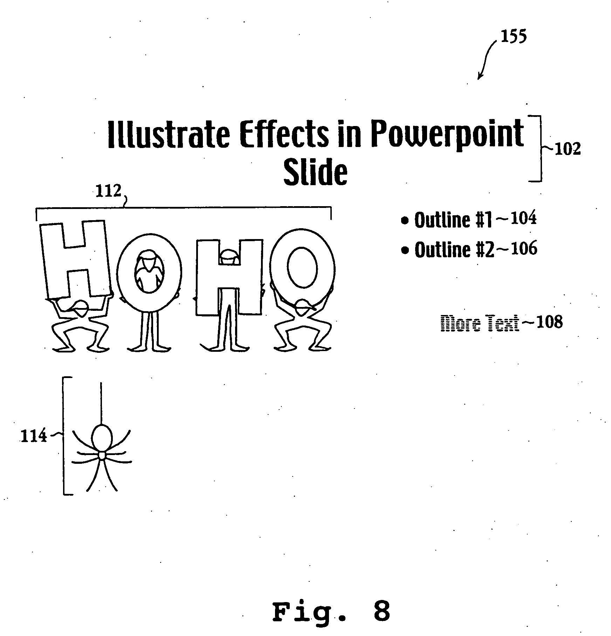

Figure 8 shows the final JPEG image 155 generated from the PPT presentation slide described and illustrated in Figure 1 in accordance with one embodiment of the invention. Figure 8 adds the "HOHO" 112 image from the "HOHO" animation described above. In one embodiment of the invention, a plurality of images that collectively are the "HOHO" GIF animation are analyzed to determine and select the most interesting and complex image of the GIF animation to present as the "HOHO" 112 image. As described above, the "HOHO" 112 is an animated GIF that moves across the screen in the direction from the bottom of the screen towards the top. Once the image is in its assigned position as illustrated in Figure 8, the last three letters disappear, and then the last three letters appear or are added to the image one at a time until the "HOHO" is complete. The last three letters disappear, and then are added again one at a time in a continuously repeating loop. As illustrated in Figure 2, in the single JPEG image generated by the prior art conversion of the PPT application, only the first "H" is rendered. Not only is the effect or the impact of the animation unclear, a complete image is not rendered.

In one embodiment of the present invention, the analysis of the animated GIF is by the application of a Roberts Cross operator to compute a spatial gradient measurement on each image in the animated GIF. The image with the highest gradient sum is selected for rendering to a single image JPEG file. The image with the highest gradient sum is assumed to have the most edges and therefore present the most interesting or complex image from the animated GIF. In the instant example, the illustrated "HOHO" 112 in Figure 8 is certainly more complex, and more complete, than the single "H" 122 shown in Figure 2. In other embodiments, alternative methods of analysis are effected to determine a most interesting or most complex image from the GIF animation to render.

Figure 8 illustrates the final JPEG image 155 rendered from the conversion of the single PPT slide illustrated in Figure 1. The title text 102, the first line of text 104, the second line of text 106, the third line of text 108. and the spider image 114 are essentially identical to the presentation objects illustrated in Figure 7, and the "HOHO" 112 representing the HOHO GIF animation is added to the image. Figures 3-8 illustrate a plurality of single image JPEG files generated from a single PPT presentation slide that capture and illustrate presentation effects and the most interesting or complex of included GIF animation images of the presentation objects in accordance with one embodiment of the invention. Figures 3-8 illustrate at least two advantages of embodiments of the present invention over the single JPEG image conversion of prior art. Embodiments of the present invention capture the end-point effect of each presentation object in a PPT slide in multiple JPEG files. Further, embodiments of the present invention analyze animated GIF presentation objects to identify and render an image with the most complexity as measured by gradient sum, or any other method of analysis as desired.

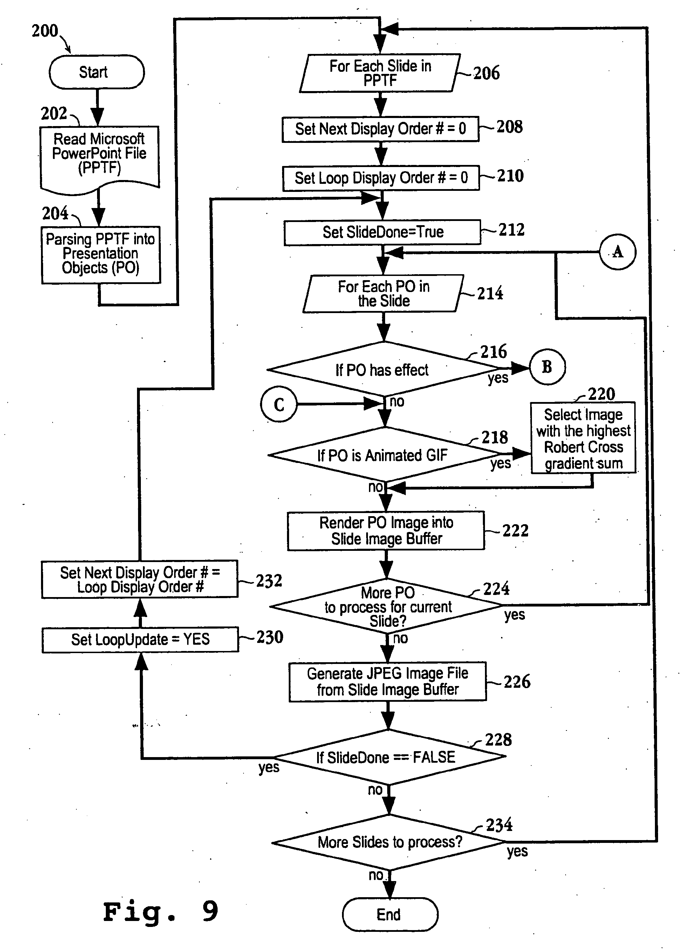

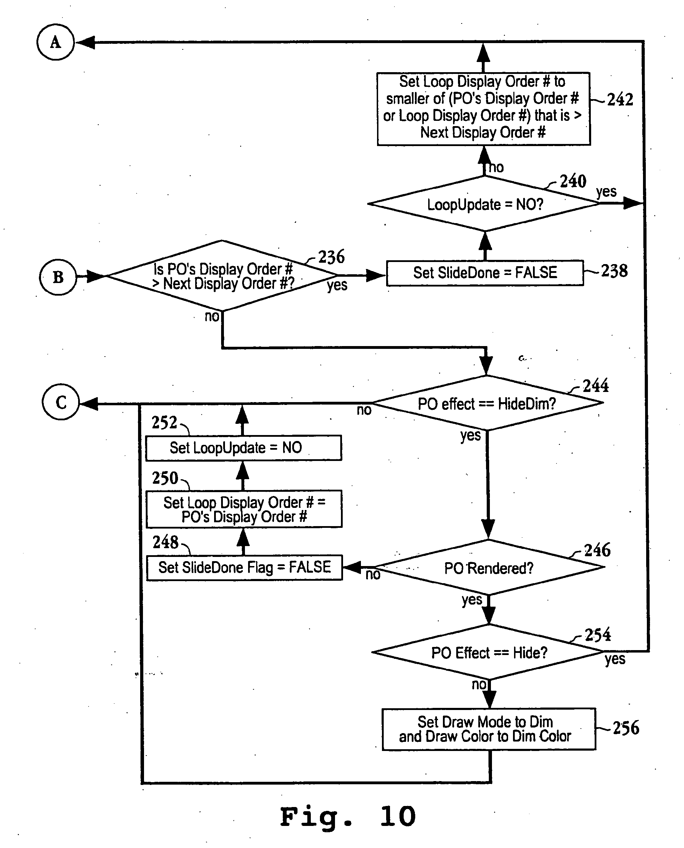

Figure 9 is a flow chart diagram 200 illustrating the method operations to convert a PPT slide presentation into single-image JPEG files in accordance with one embodiment of the present invention. JPEG format is used for illustration purposes as a common multi-platform, compressed, single image format, but of course any other compressed single-image format such as bitmap for example can be implemented, as well as multiple JPEG image files used to create motion JPEG, also known as MJPEG. The method illustrated in Figures 9 and 10 is provided as illustrative of one embodiment of the present invention, and one of any of a plurality of algorithms that can be used to achieve a result in accordance with embodiments of the present invention.

The method begins with operation 202 in which a Microsoft® PowerPoint® file is read. The PPT file can contain any number of presentation slides, and each slide can contain as few or as many, up to the limitations of the parent application, presentation objects (PO), each capable of having presentation effects, animation, etc.

The method continues with operation 204 in which the PPT file is parsed to identify all presentation objects. Each presentation slide can contain from one to a plurality of presentation objects, and presentation objects can be text, images, or animation. In one embodiment of the invention, presentation objects of the entire PPT file are first identified by parsing the file, with presentation objects parsed and identified as presentation objects for each presentation slide.

Next, in data process 206, the PPT presentation is examined one slide at a time. Data process 206 establishes the loop for method operations to be repeated for each slide in the PPT presentation file.

In operation 208, a value for Next Display Order is initialized to "0," in operation 210 a value for Loop Display Order is initialized to "0," and in operation 212 a value for SlideDone is initialized to "TRUE." In one embodiment of the invention, a detailed algorithm is processed through a plurality of operations, and repeated for a plurality of presentation objects, presentation slides, and the like. Operations 208, 210, and 212 initialize or re-set values used in processing presentation objects and presentation slides through the algorithm. Of course, it should be understood that other algorithms can be used in which the illustrated values are not used or implemented in a different manner.

The method continues with data process 214 in which a nested loop is established to examine each presentation object in the PPT presentation file. In accordance with one embodiment of the invention, after the entire PPT presentation file is parsed to identify all of the presentation objects (operation 204), each slide is examined (data process 206), and each presentation object in each slide is examined as indicated by data process 214.

The method proceeds with decision block 216 in which it is determined whether the presentation object has an effect. In one embodiment, each presentation object identified has attributes assigned or defined that describe, define, limit, enhance, or otherwise modify the presentation object. Should a presentation object have attributes that include presentation effects, the method identifies that presentation effects have been assigned to the presentation object, resulting in a "yes" to decision block 216. As described above, presentation effects include basic effects such as appearing, disappearing, and dimming, and other effects which may or may not be used as a method or vehicle to achieve the basic effects include such effects as multi-directional blinds, windowing, fly-in, fly-away, dissolving, wiping, tumbling, twirling, exploding, etc.

If presentation effects are identified, a "yes" to decision block 216, the method proceeds through connector "B" to the continuation of flow chart diagram 200 described below in reference to Figure 10. If no effects are identified, a "no" to decision block 216, the method proceeds to decision block 218 in which it is determined whether the presentation object is an animation or animated GIF. In one embodiment, animation is identified by the attributes assigned including an animated GIF, but of course any recognized format of animation can be processed in embodiments of the invention.

If the current presentation object is an animation such as an animated GIF, a "yes" to decision block 218, the method proceeds to operation 220. In operation 220, the animated GIF is analyzed to identify the most complex or interesting image of the GIF animation. In one embodiment, the analysis is accomplished by the application of a Roberts Cross operator to each image in the GIF animation. A Roberts Cross operator, as is known, is used to compute a spatial gradient measurement for each image in an animated GIF. In one embodiment of the present invention, a Roberts Cross operator is used to compute a spatial gradient measurement on each image in the animated GIF. The image with the highest gradient sum is selected, and the method proceeds to operation 222. Of course, a Roberts Cross operator image analysis is only one method of image analysis, and any other method to measure pixel gradient, edge definition, or other indicator of image complexity can be used.

If, in decision block 218, the presentation object is not identified as an animated GIF, a "no" to decision block 218, the method proceeds directly to operation 222. In operation 222, the presentation object image is rendered into a slide image buffer. The presentation object's image at operation 222 in this first, limited process through flow chart 200 is either a presentation object without effect and not animated, or it is a presentation object without effect, but animated and the image rendered is the image having the highest Roberts Cross gradient sum in the animated GIF. The appropriate image is rendered into a slide image buffer in operation 222, and the method advances to decision block 224.

In decision block 224, it is determined whether there are more presentation objects for or in the current presentation slide. As described above, an embodiment of the present invention establishes a loop to examine each slide in a PPT presentation, and a another, nested loop to examine each presentation object in each presentation slide. As described above, when an animation is identified, the most complex or interesting image is selected for rendering to a single-image JPEG file. A presentation object having presentation effects assigned, however, may generate two or more single image JPEG files to capture the presentation object, and the presentation object with the end-point effect applied. Therefore, if a single image from an animated GIF is selected and rendered to the slide image buffer, the method provides for first checking to determine whether more presentation objects may exist on the PPT presentation slide being examined before generating a JPEG image file of the selected image from the animated GIF. The resulting JPEG image file might therefore contain both the selected image from the animated GIF and another image or more as determined by the examining of the presentation slide and presentation objects. See Figures 3-8, and Table 1 below for examples of JPEG image files generated in accordance with an embodiment of the present invention.

If the current slide includes more presentation objects for analysis, a "yes" to decision block 224, the method loops back to data process 214 to examine the next presentation object in the presentation slide, in accordance with an embodiment of the invention. The method is then repeated for the next presentation object as already described. If no more presentation objects exist for the current presentation slide, a "no" to decision block 224, the method proceeds to operation 226.

In operation 226, the method provides for generating a JPEG image file from the slide image buffer file written to in operation 222. As will be apparent from the discussion of the continuation of flow chart 200 described below, the slide image buffer file may contain the image selected in operation 220 which may represent an image selected as the most complex or interesting from an animated GIF, and may contain one or more presentation objects having effects and processed as is described below.

The method continues with decision block 228 in which it is determined whether the "SlideDone" flag is set to FALSE. As described above in reference to Operations 208, 210, and 212, a plurality of flags and values are used in an algorithm used to illustrate one embodiment of the invention. In decision block 228, the illustrated method checks to see if the SlideDone flag has been set to FALSE. If the SlideDone flag has been set to FALSE, (e.g., see operation 238 described below), a "yes" to decision block 228, the method proceeds through operations 230 in which the LoopUpdate flag is set to "YES," and operation 232 in which the Next Display Order number is set to the Loop Display Order number, and back to operation 212 in which the SlideDone flag is set to TRUE. The method then proceeds with data process 214 and continued processing of presentation objects in the presentation slide.

If, in decision block 228, the SlideDone flag is not set to FALSE, a "No" to decision block 228, the method proceeds to decision block 234 in which it is determined if all of the presentation slides in the PPT file have been processed. If all of the presentation slides in the PPT file have not been processed, a "yes" to decision block 234 because there are more slides to process, the method loops back to data process 206 to examine a next presentation slide in the PPT presentation file. If all of the presentation slides in the PPT file have been processed, a "no" to decision block 222 since there are no more slides to process, the method is done.

Figure 9 presents a first part of the flow chart diagram illustrating the method operations to convert a PPT presentation file into a plurality of JPEG files in accordance with an embodiment of the invention. If, in the examination of presentation objects, presentation effects are found to be assigned, the method proceeds through connector "B" to the continuation of flow chart 200 described in reference to Figure 10.

Figure 10 is a continuation of flow chart diagram 200 illustrating the method operations to convert a PPT slide presentation into single-image JPEG files in accordance with one embodiment of the present invention. The method operations illustrated in Figure 10 are accessed through connector "B" which flows from decision block 216 illustrated and described above in reference to Figure 9. In decision block 216, it is determined whether the presentation object has presentation effects assigned, attributed, or otherwise associated with the presentation object. If there are presentation effects, a "yes" to decision block 216, the method proceeds through connector "B" to the continuation of flow chart diagram 200 shown in Figure 10.

After proceeding through connector "B," the method continues with decision block 236 in which it is determined whether the presentation object display order number is greater than the next display order number. As described above in reference to Figures 3-8, an appearing effect in a PPT presentation can be achieved by the assigning of display order among a plurality of objects. Similarly, a disappearing of an object can occur before, upon, or after designated events or effects, and typically each presentation object with effects has an associated display order number. In one embodiment of the present invention, the conversion of a PPT slide presentation into a plurality of JPEG image files provides a logical representation of the parent PPT slide presentation with JPEG image files sequenced to accurately convey the effects assigned to the presentation objects as appropriate. By way of example, if a presentation object has an appearing effect that is to occur following a dimming effect of another presentation object, the JPEG image of the dimming effect will be generated prior to the generation of the JPEG image showing the appearing effect. Decision block 236 ensures the correct order of presentation objects, and the effects assigned to the presentation objects, is followed when generating the JPEG image files. Therefore, if the current presentation object display order number is greater than a next display order number, a "yes" to decision block 236, the method proceeds to operation 238 in which the SlideDone flag is set to FALSE. In one embodiment, operation 238 represents one of a plurality of flags and values used in an algorithm used to illustrate one embodiment of the invention to ensure processing of each presentation object and each presentation slide. Once the SlideDone flag is set to FALSE, the method proceeds to decision block 240 to determine whether the LoopUpdate flag is set to NO.

In one embodiment, the LoopUpdate flag is another of the plurality of flags and values used in an algorithm used to illustrate one embodiment of the invention, and is further discussed in reference to operation 252 below. If the LoopUpdate flag is set to NO, a "yes" to decision block 240, the method continues through connector "A" back to data process 214 to examine another presentation object.

If the LoopUpdate flag is not set to NO, a "no" to decision block 240, the method proceeds with operation 242. In operation 242, the method provides for setting the Loop Display Order number to the smaller of either the Presentation Object's Display Order number or the Loop Display Order number that is greater than the Next Display Order number. In one embodiment of the invention, method operation 242 ensures that the end effect of a presentation effect is captured, and that each of the presentation objects of a presentation slide is processed in order to produce a logical rendering of one or more JPEG image files capturing presentation effects for those presentation objects having presentation effects assigned or attributed. In one embodiment of an algorithm implemented to achieve a plurality of JPEG image files in accordance with the present invention, a plurality of flags and values are used, and in operation 242, comparative analysis of used to continue processing.

Following operation 242, the method loops back through connector "A" to data process 214 for continued processing and analysis of presentation objects as described.

Returning to decision block 236, if the presentation object's Display Order number is not greater than the Next Display Order number, a "no" to decision block 236, the method proceeds to decision block 244 where it is determined whether the presentation object's assigned or attributed effect is a hiding or dimming effect. If the effect is *not* a hiding or dimming effect, a "no" to decision block 244, the method proceeds through connector "C" back to decision block 218 for continued processing in accordance with the method operations described above. If the effect is a hiding or dimming effect; a "yes" to decision block 244, the method continues to decision block 246.

In decision block 246, in one embodiment of the invention, the method determines whether the presentation object is already rendered. In other words, if an assigned effect is a hiding or dimming effect, the method next provides for determining whether the presentation object is already rendered. If the presentation object is not rendered, a "no" to decision block 246, the method proceeds with operation 248 in which the SlideDone flag is set to FALSE, and then to operation 250 in which the Loop Display Order is set to the Presentation Object's Display Order number. The method then proceeds to operation 252 in which the LoopUpdate flag is set to NO, and then through connector "C" to decision block 218 in Figure 9 for continued processing. As described above, a plurality of flags and values are used in one embodiment of an algorithm for processing presentation slides in accordance with the present invention. In one embodiment, operations 248, 250, and 252 set and/or update values to ensure continued processing. In one embodiment of the invention, operations 248, 250, and 252 are used to capture the state of a presentation object prior to the application of effect. In other words, if, for example, the effect is to dim the presentation object, a "yes" to decision block 244, but the presentation object is not yet rendered, a "no" to decision block 246, the "effect" is not captured unless a "non-dimmed" presentation object is first rendered in one JPEG image, and then with the application of the effect, a dimmed presentation object is rendered in another JPEG image. In one embodiment of the invention, operations 248, 250, and 252 ensure the display order sequencing is maintained, as well as continued presentation object processing in the current slide, and returns the method through connector "C" to decision block 218 in Figure 9. As described above, continued processing through the method operations fullowing decision block 218 will result in the present presentation object being rendered, allowing the continued processing through decision block 246.

If the presentation object is already rendered, a "yes" to decision block 246, the method continues to decision block 254 in which it is determined whether the assigned effect is a "hiding" effect. If the effect is a hiding effect, a "yes" to decision block 254, the method proceeds through connector "A" back to data process 214 in Figure 9 to continue examining and processing presentation objects as already described. By way of example, if the presentation effect is a hiding effect, the "hiding" might be accomplished by placement or movement of another presentation object in the presentation slide hiding the current presentation object to which the effect is attributed. A subsequent presentation object, a presentation object having a subsequent display order number to the current presentation object, will accomplish the hiding of the current presentation object, and the effect will be captured upon examination, processing, and rendering of the presentation object having the subsequent display order number. Therefore, the method returns to data process 214 in Figure 9 for continued examination and processing.

If, in decision block 254, it is determined that the effect is *not* a hiding effect, a "no" to decision block 254, the method proceeds to operation 256. In one embodiment of the invention, the method provides in operation 254 for the "Draw Mode" to be set to "Dim" and the "Draw Color" to be set to "Dim Color." In one embodiment, this operation ensures the dimmed effect, also known as a "grayed out" effect is captured when the presentation object is rendered. The method then proceeds through connector "C" back to decision block 218 of Figure 9 for continued processing as described above.

As described above, flow chart 200 illustrated in Figures 9 and 10, describes one embodiment of an algorithm to create JPEG images, or other desired compressed, single image format, of a PPT presentation. Of course, other algorithms can be implemented to achieve the same result. Table 1 below illustrates the processing of the single PPT presentation slide illustrated in Figure 1, and converted into a plurality of JPEG image files shown in Figures 3-8. Each of the presentation objects is described and the processing of the single PPT presentation slide illustrated in Figure 1 is traced through flow chart 200 illustrated and described in reference to Figures 9 and 10.

Table 1 is provided to trace the generation of Figures 3-8 from the presentation slide and presentation objects contained therein illustrated in Figure 1. Turning to Figure 1, Presentation Objects 1-7 (PO1-PO7) are designated as follows:
- PO1 :: Title text 102
- PO2 :: First line of text 104
- PO3 :: Spider image 114
- PO4 :: Third line of text 108
- PO5 :: Frog image 110
- PO6 :: HOHO image 112
- PO7 :: Second line of text 106

Each of PO1-PO7 are traced through flowchart 200 illustrated in Figures 9 and 10, until processing of the presentation slide into JPEG images in accordance with the illustrated method is complete. As described above in reference to Figure 9, the method begins with operation 202 in which a PPT file is read. In the instant example, the PPT presentation file is the single presentation slide 100 illustrated in Figure 1. The method continues with operation 204 in which the PPT file is parsed into presentation objects. In the instant example, the presentation objects are as designated above for PO1-PO7. In data block 206, each slide is examined, and in the instant example, the single presentation slide 100 is examined. In operation 208, the Next Display Order number is set to 0, and in operation 210, the Loop Display Order number is set to 0. The method then proceeds as described above with operation 212 in which SlideDone is set to TRUE, and in data block 214, the loop to examine each PO in the presentation slide is established. The following table begins with PO1 at data block 214.

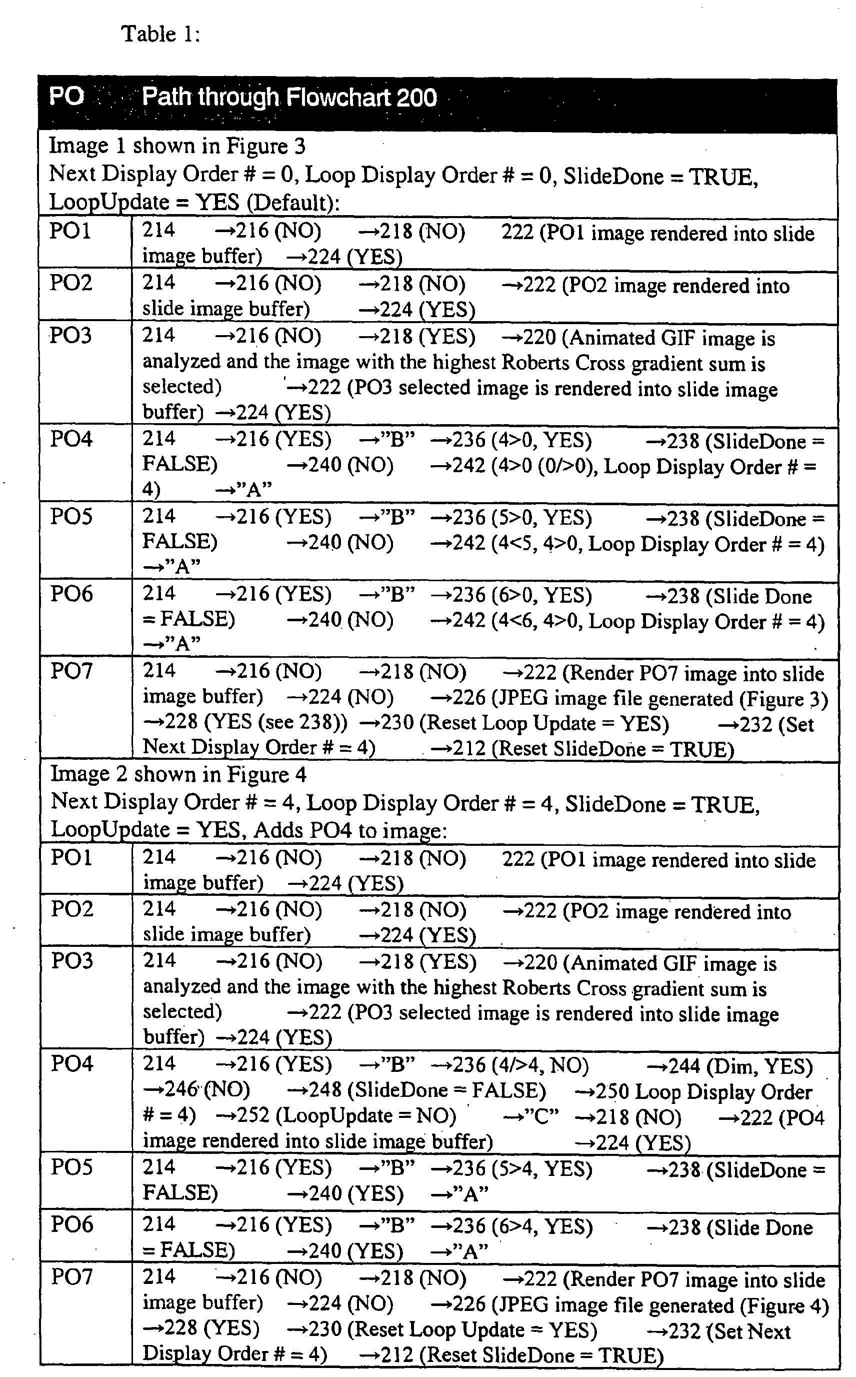

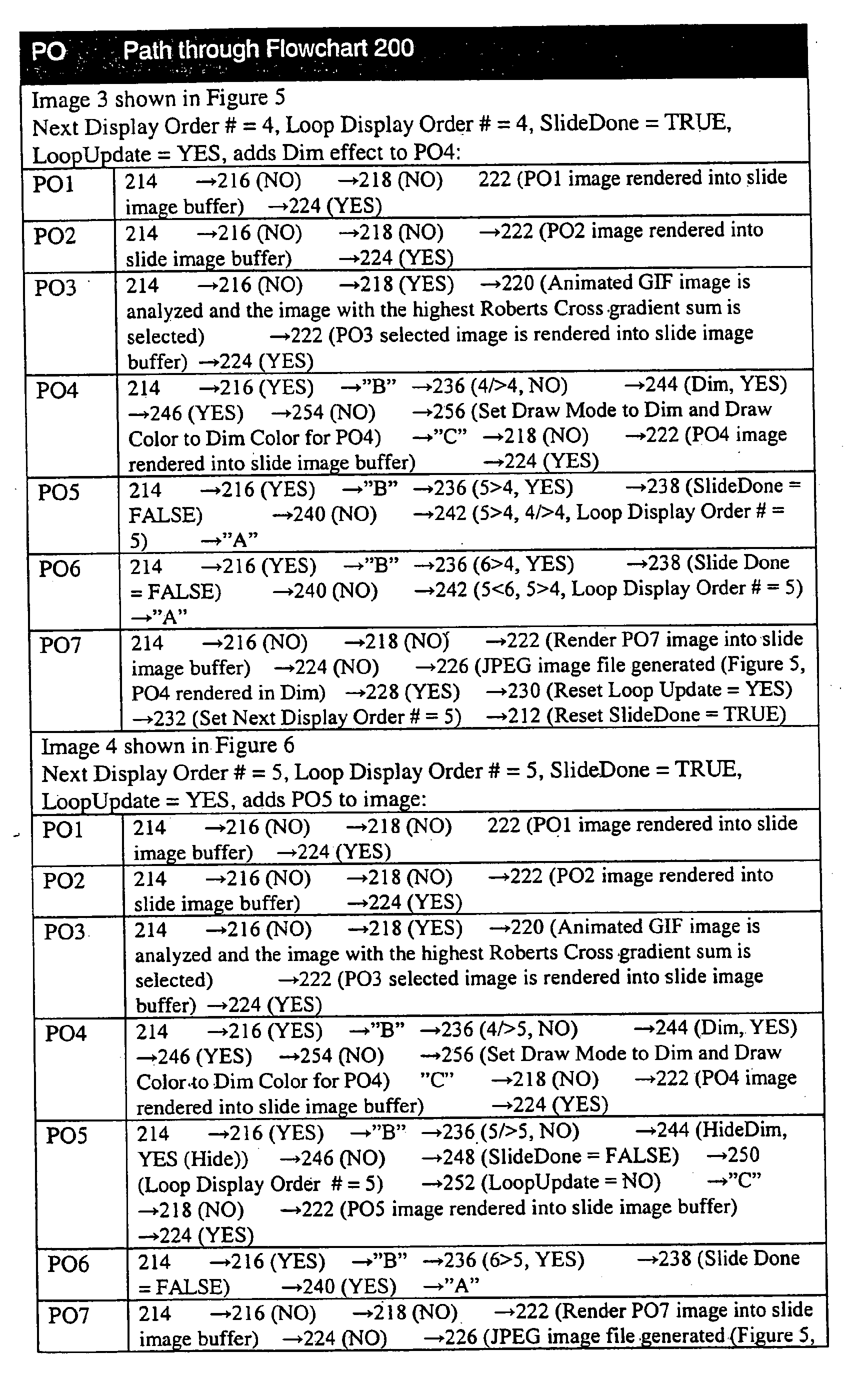

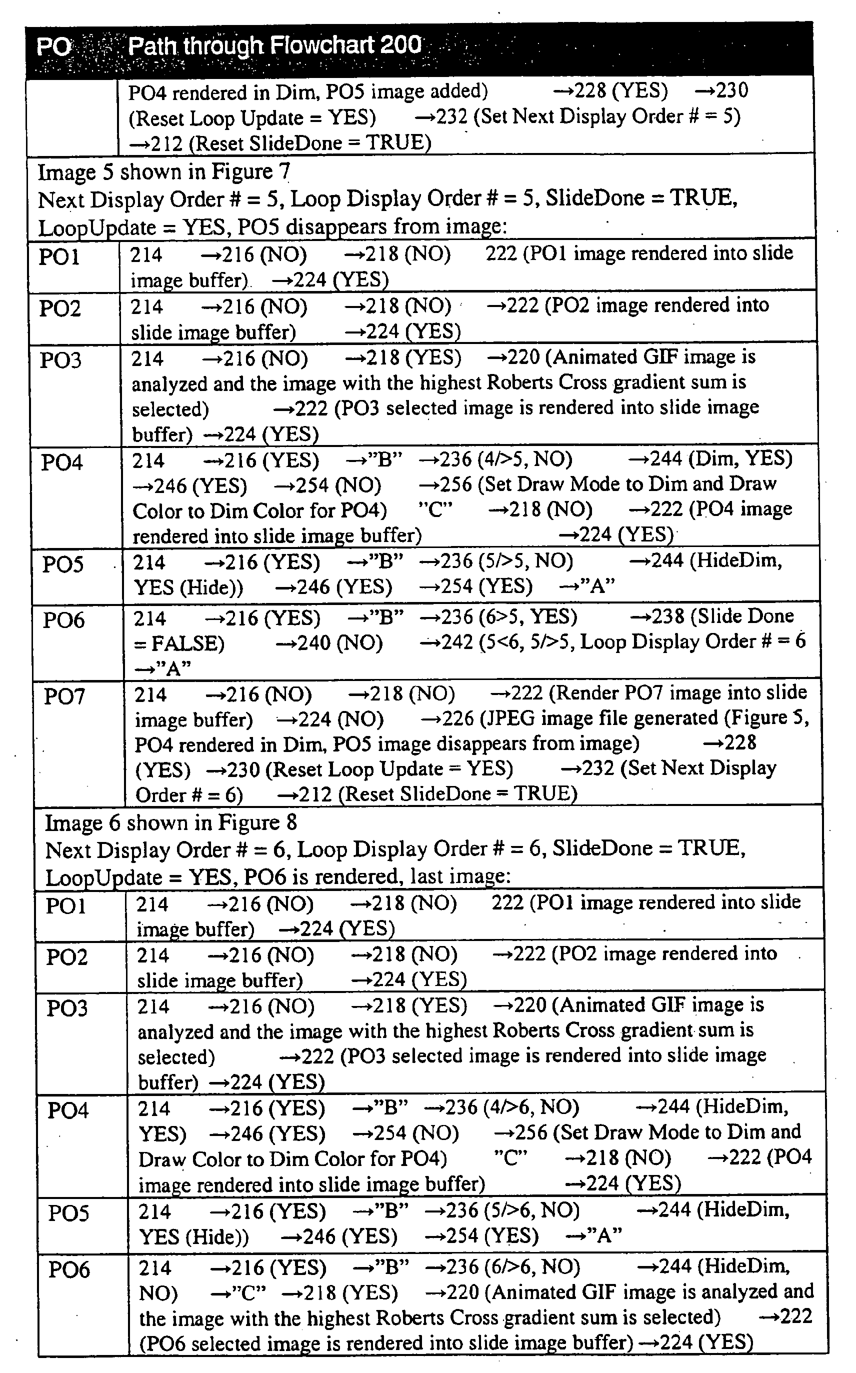

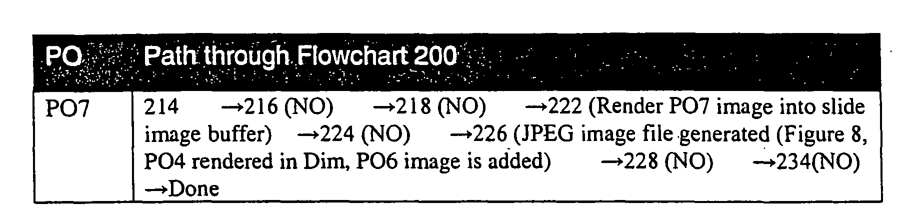

In summary, the above described invention provides a method for converting PPT presentation files into single image JPEG files, or any other type of compressed image files as desired. The JPEG format was selected as the exemplary format due to the multi-platform capabilities and essentially universal implementation in networked, internet, and cross-platform environments. It should be appreciated that embodiments of the present invention capture both presentation objects in a PPT presentation as well as presentation object effects in up to a plurality of JPEG image files. The disclosed method can be implemented as a stand alone program, a client-server application, as well as in computer code written to computer-readable media, capable of being accessed within a distributed network or downloaded from the internet, or in firmware written to and executed from a computer chip.

With the above embodiments in mind, it should be understood that the invention may employ various computer-implemented operations involving data stored in computer systems. These operations are those requiring physical manipulation of physical quantities. Usually, though not necessarily, these quantities take the form of electrical or magnetic signals capable of being stored, transferred, combined, compared, and otherwise manipulated. Further, the manipulations performed are often referred to in terms, such as producing, identifying, determining, or comparing.

The invention can also be embodied as computer readable code on a computer readable medium. The computer readable medium is any data storage device that can store data which can be thereafter read by a computer system. The computer readable medium also includes an electromagnetic carrier wave in which the computer code is embodied. Examples of computer readable media include hard drives, network attached storage (NAS), read-only memory, random-access memory, CD-ROMs, CD-Rs, CD-RWs, magnetic tapes, and other optical and non-optical data storage devices. The computer readable medium can also be distributed over a network coupled computer system so that the computer readable code is stored and executed in a distributed fashion.

It should also be appreciated that the functionality of the conversion of PPT presentation files to JPEG image files as described herein can be incorporated on one computer in one embodiment. Additionally, the code performing the functionality of the conversion of PPT presentation files to JPEG image files can be hard coded onto a semiconductor chip. One skilled in the art will appreciate that the semiconductor chip can include logic gates configured to provide the functionality discussed above. For example, a hardware description language (HDL) can be employed to synthesize the firmware and the layout of the logic gates for providing the necessary functionality described herein.

Although the foregoing invention has been described in come detail for purposes of clarity of understanding, it will be apparent that certain changes and modifications may be practiced within the scope of the appended claims. Accordingly, the present embodiments are to be considered as illustrative and not restrictive, and the invention is not to be limited to the details given herein, but may be modified within the scope and equivalents of the appended claims.

## Claims

1. A method for converting a PowerPoint® (PPT) presentation file into compressed single image files, comprising:
opening a PPT presentation file;
parsing the PPT presentation file to identify each presentation slide and to identify each presentation object presented in each presentation slide;
generating a first compressed single image format image capturing a presentation object in a first presentation slide of the PPT presentation file; and
generating a second compressed single image format image capturing the presentation object in the first presentation slide of the PPT presentation file,
wherein the first compressed single image format image captures the presentation object before an effect is applied and the second compressed single image format image captures an end-point of the effect applied to the presentation object.

2. The method of claim 1, further comprising:
identifying an animated GIF object;
examining each image in the animated GIF object; and
selecting an image from the examined animated GIF object for rendering as a compressed single image format image.

3. The method of claim 1, wherein the parsing of the PPT presentation file to identify each presentation slide and to identify each presentation object presented in each presentation slide includes identifying presentation object attributes, the presentation object attributes including presentation effects assigned to a presentation object.

4. The method of claim 2, wherein the examining of each image in the animated GIF object includes an application of a Roberts Cross operator to each image in the animated GIF object.

5. The method of claim 4, wherein the selecting an image from the examined animated GIF object for rendering as a compressed single image format image includes identifying the image with a highest spatial gradient measurement computed by the application of the Roberts Cross operator.

6. The method of claim 1, wherein a file format of the first compressed single image format image and the second compressed single image format image is JPEG.

7. A method to create JPEG image format files from a PowerPoint® (PPT) presentation file, comprising:
identifying each presentation slide in the PPT presentation file;
identifying each presentation object in each presentation slide;
determining whether each presentation object in each presentation slide has effects applied;
determining whether each presentation object in each presentation slide is an animated GIF object;
rendering an image for each animated GIF object into an image buffer; and
generating a JPEG image format file to show an end effect for any presentation object having effects applied.

8. The method of claim 7, wherein the determining whether each presentation object in each presentation slide has effects applied includes an examination of any attributes assigned to each presentation object in each presentation slide.

9. The method of claim 7, wherein the determining whether each presentation object in each presentation slide is an animated GIF object, includes an examination of any attributes assigned to each presentation object in each presentation slide.

10. The method of claim 9, further comprising:
examining each image in the animated GIF object;
selecting an image in the animated GIF object to render into the image buffer; and
rendering the selected image into the image buffer.

11. The method of claim 10, wherein the examining each image in the animated GIF object includes identifying a most complex image in the animated GIF object.

12. The method of claim 10, wherein the examining each image in the animated GIF object includes an application of a Roberts Cross operator to measure a spatial gradient of each image in the animated GIF object.

13. The method of claim 12, wherein the selecting the image in the animated GIF object to render into the image buffer includes selecting the image having a highest spatial gradient sum obtained by the application of the Roberts Cross operator.

14. A computer readable media having program instructions for converting a PowerPoint® (PPT) presentation file into a plurality of compressed image files, comprising:
program instructions for parsing the PPT presentation file;
program instructions for identifying each presentation slide in the PPT presentation file;
program instructions for identifying a presentation object in each presentation slide in the PPT presentation file;
program instructions for determining whether the presentation object has presentation effects;
program instructions for generating a first compressed image file showing the presentation object; and
program instructions for generating a second compressed image file showing the presentation object having the effect applied.

15. The computer readable media of claim 14, further comprising:
program instructions for identifying an animated GIF object;
program instructions for analyzing each image of the animated GIF object;
program instructions for selecting a single image of the animated GIF object; and
program instructions for generating a compressed image file showing the selected single image of the animated GIF object.

16. The computer readable media of claim 14, wherein the determining whether the presentation object has presentation effects includes examining any attributes assigned to the presentation object.

17. The computer readable media of claim 14, further comprising:
program instructions for generating a plurality of compressed image files for each presentation slide in the PPT presentation file, wherein the plurality of compressed image files illustrate an end effect for each presentation object having an effect.

18. The computer readable media of claim 15, wherein the analyzing each image of the animated GIF object includes applying a Roberts Cross operator to each image of the animated GIF object.

19. The computer readable media of claim 18, wherein the selecting the single image of the examined animated GIF object includes identifying an image with a highest spatial gradient measurement computed by the application of the Roberts Cross operator.

20. An integrated circuit chip for converting a PowerPoint® (PPT) presentation file into a plurality of compressed images files, comprising:
logic for reading the PPT presentation file;
logic for parsing the PPT presentation file;
logic for identifying each presentation slide in the PPT presentation file;
logic for identifying each presentation object in each presentation slide;
logic for generating a first compressed image file showing a presentation object without a presentation effect applied; and
logic for generating a second compressed image file showing an end effect of a presentation object having an effect applied.

21. The integrated circuit chip of claim 20, further comprising:
logic for generating a plurality of compressed image files for each presentation slide in the PPT presentation file, wherein the plurality of compressed image files illustrate an end effect for each presentation object having a presentation effect.
